# EUROPÄISCHE PATENTANMELDUNG

(11) **EP 3 118 605 A1**
(43) Veröffentlichungstag der Anmeldung: **18.01.2017**
(21) Anmeldenummer: 16176298.4
(22) Anmeldetag: 27.06.2016
(51) Int. Cl.: G01M 13/04, H02P 29/02, G01L 3/00, H02P 23/14

(54) **VERFAHREN ZUR ÜBERWACHUNG EINES LAGERSYSTEMS**

(30) Priorität: 13.07.2015 DE 102015213084
(71) Anmelder: Baumüller Nürnberg GmbH, 90482 Nürnberg (DE)
(72) Erfinder: LELKES, András, 90491 Nürnberg (DE)
(74) Vertreter: FDST Patentanwälte

(57) **Zusammenfassung**

Die Erfindung betrifft ein Verfahren (64) zur Überwachung eines Lagersystems (50), insbesondere einer elektrischen Maschine (4), das einen Wellenabschnitt (48) aufweist. Ein auf den Wellenabschnitt (48) aufgebrachtes erstes Drehmoment (70) und ein von dem Wellenabschnitt (48) aufgebrachtes zweites Drehmoment (46) werden erfasst. Eine Differenz (94) aus dem ersten Drehmoment (70) und dem zweiten Drehmoment (46) wird gebildet, und ein Fehler (103) wird identifiziert, falls die Differenz (94) größer als ein erster Grenzwert (98) ist. Die Erfindung betrifft ferner ein Lagersystem (50) und eine elektrische Maschine (4).

## Beschreibung

Die Erfindung betrifft ein Verfahren zur Überwachung eines Lagersystems, das einen Wellenabschnitt aufweist. Beispielsweise umfasst der Wellenabschnitt einen antriebsseitigen und einen abtriebsseitigen Bereich, zwischen denen bevorzugt ein Lager angeordnet ist. Das Lagersystem ist zweckmäßigerweise ein Bestandteil einer elektrischen Maschine, wie eines Elektromotors. Die Erfindung betrifft ferner ein Lagersystem und eine elektrische Maschine.

Elektrische Maschinen, wie z.B. Elektromotoren, weisen üblicherweise eine Welle auf, an der ein Rotor befestigt ist. Die Welle selbst ist mittels eines Lagersystems drehbar um eine Rotationsachse gelagert. Üblicherweise umfasst das Lagersystem selbst zwei Lager, die im jeweiligen Endbereich der zylinderförmigen Welle positioniert sind. Der Rotor ist zwischen den beiden Lagern angeordnet. Jedes der Lager ist üblicherweise an einem Lagerschild befestigt. Um eine Reibung zu reduzieren sind die Lager meist als sogenannte Wälzlager ausgestaltet. Somit umfasst jedes der Lager einen Innenring, einen Außenring und einen dazwischen angeordnete Wälzkörper. Sofern die elektrische Maschine ein Innenläufer ist, ist der Innenring fest an die Welle angebunden, und der Außenring des Lagers an dem Lagerschild drehfest befestigt, der üblicherweise bei Betrieb drehfest gegenüber der Welle ist. Die Wälzkörper sind beispielsweise als Kugeln ausgestaltet und zwischen dem Innen- und dem Außenring in tangentialer Richtung frei beweglich positioniert. Bei einer Rotationsbewegung der Welle laufen die Wälzkörper um die Welle um, und rotieren ferner um eine jeweilige Achse, die parallel zur Rotationsachse der Welle ist, und die zur Rotationsachse der Welle beabstandet ist.

Bei einem Eindringen von einer Verschmutzung in den Bereich zwischen dem Innen- und dem Außenring ist es möglich, dass eine freie Rotierbarkeit der einzelnen Wälzkörper beeinträchtigt ist. Infolgedessen ist die Reibung zwischen dem Wälzkörper und dem Innen- bzw. Außenring erhöht, was zu einer Wärmeentwicklung führt. Diese Erwärmung oder aber auch die erhöhte Reibung können weitere Bestandteile der elektrischen Maschinen schädigen. Auch ist ein sogenanntes Festfressen der Welle möglich, bei der eine weitere Rotation der Welle, und folglich des hier angebundenen Rotors, nicht mehr möglich ist. Dies erfolgt meistens vergleichsweise abrupt, sodass ein mittels der Welle angetriebenes Bauteil, oder ein die Welle antreibendes Bauteil ebenfalls vergleichsweise abrupt abgebremst wird. Aufgrund dessen ist eine Beschädigung des Bauteils ebenfalls möglich. Sofern das Bauteil eine vergleichsweise hohe Trägheit aufweist, ist ein Abreißen einer Kupplung zwischen dem Bauteil und der Welle möglich.

Ein derartiges Fehlverhalten, also ein Beginn einer Beschädigung des Lagers, ist üblicherweise aufgrund erhöhter Betriebsgeräusche akustisch wahrnehmbar. Falls jedoch eine vergleichsweise große Anzahl an derartigen Maschinen in einem Bereich aufgestellt ist, die jeweils eine Geräuschentwicklung aufweisen, ist das Fehlverhalten eines einzelnen Lagers einer der Maschinen mit dem menschlichen Ohr nicht mehr wahrnehmbar. Auch ist bei vollautomatisierten Industrieanlagen üblicherweise eine Präsenz einer menschlichen Aufsicht aufgrund der in einem derartigen Umfeld herrschenden Umgebungsvariablen, wie einer erhöhten Temperatur und der erhöhten Geräuschbelastung, sowie aufgrund von Sicherheitsgründen reduziert.

Der Erfindung liegt die Aufgabe zugrunde, ein besonders geeignetes Verfahren zur Überwachung eines Lagersystems, ein besonders geeignetes Lagersystem sowie eine besonders geeignete elektrische Maschine mit einem Lagersystem anzugeben, wobei zweckmäßigerweise eine vergleichsweise zuverlässige Erkennung eines Fehlverhaltens des Lagersystems gewährleistet ist, und wobei insbesondere Betriebs- und/oder Herstellungskosten gesenkt sind.

Hinsichtlich des Verfahrens wird diese Aufgabe durch die Merkmale des Anspruchs 1 und hinsichtlich des Lagersystems durch die Merkmale des Anspruchs 10 sowie hinsichtlich der elektrischen Maschine durch die Merkmale des Anspruchs 11 erfindungsgemäß gelöst. Vorteilhafte Weiterbildungen und Ausgestaltungen sind Gegenstand der Unteransprüche.

Das Verfahren dient der Überwachung eines Lagersystems, und insbesondere dem Betrieb einer Überwachungseinrichtung des Lagersystems. Mit anderen Worten wird mittels des Verfahrens eine Überwachungseinrichtung des Lagersystems betrieben. Das Lagersystem selbst ist vorzugsweise Bestandteil einer elektrischen Maschine, wie eines Generators. Zweckmäßigerweise jedoch ist das Lagersystem Bestandteil eines Elektromotors, insbesondere eines permanent erregten Synchronmotors. Insbesondere ist der Elektromotor ein Bestandteil eines Antriebs einer Industrieanlage. Beispielsweise ist der Elektromotor mittels eines Umrichters betrieben. Zweckmäßigerweise ist die Leistung zwischen 0,5 kW und 60 kW, und insbesondere größer als 1 kW, 3 kW oder 5 kW und zweckmäßigerweise kleiner als 40 kW oder 30 kW. Die Nenndrehzahl ist beispielsweise zwischen 4.500 U/ min und 7.000 U/ min. Vorzugsweise ist die elektrische Maschine bürstenlos.

Das Lagersystem umfasst insbesondere ein Lager, wie ein Wälzlager, das zum Beispiel einen Innenring sowie einen Außenring aufweist, zwischen denen zweckmäßigerweise eine Anzahl an Wälzkörpern angeordnet ist. Das Lagersystem umfasst ferner einen Wellenabschnitt, also folglich einen Abschnitt einer Welle, insbesondere die vollständige Welle. Zumindest einer der Ringe des Lagers ist an dem Wellenabschnitt drehfest angebunden, falls das Lager in Wälzlager ist. Insbesondere der Innenring an dem Wellenabschnitt befestigt, falls das Lagersystem Bestandteil einer als Innenläufer ausgestalteten elektrischen Maschine ist.

In einem ersten Arbeitsschritt wird ein erstes Drehmoment erfasst, das auf den Wellenabschnitt aufgebracht wird. Mit anderen Worten wird das Drehmoment erfasst, das in den Wellenabschnitt eingeleitet wird. Unter erfasstem Drehmoment wird insbesondere der aktuelle Wert des Drehmoments verstanden. Beispielsweise wird das von dem Rotor aufgebrachte Drehmoment erfasst, sofern an dem Wellenabschnitt ein Rotor befestigt ist. Insbesondere wird das Drehmoment erfasst, das ein Bauelement aufweist, das mit dem Wellenabschnitt gekoppelt ist, und das in Kraftflussrichtung vor dem Wellenabschnitt angeordnet ist, insbesondere direkt vor dem Wellenabschnitt.

In einem weiteren Arbeitsschritt wird ein zweites Drehmoment erfasst, wobei als zweites Drehmoment dasjenige Drehmoment herangezogen wird, das von dem Wellenabschnitt selbst aufgebracht wird. Mit anderen Worten wird das Drehmoment erfasst, das von dem Wellenabschnitt auf ein weiteres Bauelement übertragen wird. Hierfür wird zweckmäßigerweise das Drehmoment in Kraftflussrichtung am Ende des Wellenabschnitts erfasst, insbesondere im Bereich einer Kopplung mit einem in Kraftflussrichtung hinter dem Wellenabschnitt angeordneten Bauelement.

Beispielsweise wird das erste Drehmoment in einem antriebsseitigen Bereich des Wellenabschnitts erfasst, und das zweite Drehmoment in einem abtriebsseitigen Bereich des Wellenabschnitts, wobei die beiden Bereiche insbesondere direkt miteinander verbunden sind, beispielsweise einstückig sind. Alternativ sind diese beiden Bereiche mittels miteinander gekoppelter Bereiche des Wellenabschnitts gebildet, die nicht starr miteinander verbunden sind. Insbesondere ist zwischen dem antriebsseitigen Bereich und dem abtriebsseitigen Bereich ein Lager des Lagersystems angeordnet, beispielsweise räumlich und/oder funktional. In den antriebsseitigen Bereich des Wellenabschnitts wird ein Drehmoment eingeleitet, wohingegen mittels des abtriebsseitigen Bereichs des Wellenabschnitts ein Drehmoment abgegeben wird. Mit anderen Worten befindet sich der antriebsseitige Bereich in Kraftflussrichtung vor dem abtriebsseitigen Bereich. Geeigneterweise erfolgt zwischen dem antriebsseitigen Bereich und dem abtriebsseitigen Bereich kein weiteres Einleiten einer Kraft in den Wellenabschnitt. Insbesondere sind die beiden Bereiche einstückig miteinander verbunden. Zusammenfassend wird insbesondere das auf den Wellenabschnitt aufgebrachte erste Drehmoment in dem antriebsseitigen Bereich des Wellenabschnitts erfasst, und das von dem Wellenabschnitt aufgebrachte zweite Drehmoment wird in dem abtriebsseitigen Bereich des Wellenabschnitts erfasst. Geeigneterweise wird das erste Drehmomenterfasst, das auf den antriebsseitigen Bereich des Wellenabschnitts aufgebracht wird, und das zweite Drehmoment wird erfasst, das von dem abtriebsseitigen Bereich des Wellenabschnitts aufgebracht wird.

In einem weiteren Arbeitsschritt wird die Differenz aus dem ersten Drehmoment und dem zweiten Drehmoment gebildet. Hierfür wird zweckmäßigerweise das zweite Drehmoment von dem ersten Drehmoment abgezogen. Insbesondere erfolgt keine weitere Rechenoperation zwischen Erfassen der beiden Drehmomente und Bildung der Differenz. Insbesondere ist das erste Drehmoment stets größer als das zweite Drehmoment, da dieses in Kraftflussrichtung vor dem zweiten Drehmoment erfasst wird. Die Differenz entspricht somit einem Drehmomentverlust, der aufgrund von Reibung oder aber anderer parasitärer Effekte entsteht.

In einem weiteren Arbeitsschritt wird ein Fehler identifiziert, falls die Differenz größer als ein erster Grenzwert ist, der beispielsweise gleich 0 (Null) Nm oder aber größer als 0 (Null) Nm ist. Insbesondere wird der erste Grenzwert bei Erstellung des Lagersystems festgelegt und entspricht dem erwarteten, aufgrund von Reibung entstehenden Verlust an Drehmoment. Beispielsweise wird der erste Grenzwert anhand von Herstellerangaben des Lagers festgelegt, sofern dieses vorhanden ist. Aufgrund der Differenzbildung wird somit bestimmt, wie groß der Drehmomentverlust bei Betrieb des Lagersystems ist, und ob dies unterhalb des ersten Grenzwertes ist, unterhalb dessen ein sicherer Betrieb des Lagersystems möglich ist. Sobald identifiziert wird, dass ein zu großer Drehmomentabfluss vorliegt, ist hingegen ein Fehlverhalten (Fehler) des Lagersystems identifiziert. Folglich wird direkt erfasst, wie groß der aktuelle Drehmomentverlust ist. Aufgrund des ersten Grenzwerts ist es möglich, zu bestimmen, ob ein sicherer Betrieb des Lagersystems möglich ist. Hierfür ist keine direkte Überwachung des Lagers selbst erforderlich, sofern dieses vorhanden ist. Insbesondere müssen keine speziellen Sensoren in das Lager eingebracht werden, die dessen Verschleißgrad erfassen.

Aufgrund der doppelten Drehmomenterfassung, nämlich des ersten Drehmoments und des zweiten Drehmoments, ist ferner eine Sicherheit des Lagersystems erhöht. Die Differenz kann nämlich auch aufgrund einer Funktionsstörung des für die Erfassung verwendeten Systems (Drehmomenterfassungsvorrichtung) bedingt sein. Aufgrund der Doppelerfassung des Drehmoments ist somit eine redundante Drehmomenterfassung gegeben, mit Ausnahme des Drehmomentverlustes aufgrund von Reibung. Infolgedessen ist eine Überprüfung der einzelnen zur Erfassung des Drehmoments verwendeten Sensoren ermöglicht. Somit ist auch eine Bestimmung eines Fehlerzustandes der einzelnen Sensoren ermöglicht, sodass die Sicherheit des Lagersystems erhöht ist. Beispielsweise wird eine sicheren Funktion ausgeführt, sobald die Differenz größer als der erste Grenzwert oder aber kleiner als ein dritter Grenzwert ist, der beispielsweise gleich Null (0) Nm beträgt. In diesem Fall wäre die zur Erfassung des ersten Drehmoments verwendete Drehmomenterfassungsvorrichtung fehlerhaft.

Besonders bevorzugt wird das erste Drehmoment zeitgleich mit dem zweiten Drehmoment erfasst, sodass ein aktueller Verlust an Drehmoment bestimmt werden kann. In einer Alternative hierzu wird für das erste Drehmoment oder das zweite Drehmoment ein zeitlicher Mittelwert herangezogen, wobei zweckmäßigerweise sowohl für das erste als auch für das zweite Drehmoment ein zeitlicher Mittelwert bestimmt wird. Hierbei ist zweckmäßigerweise das zur Mittelwertbildung herangezogene zeitliche Fenster gleich.

Beispielsweise wird das erste Drehmoment direkt gemessen, also zweckmäßigerweise das Drehmoment gemessen, das ein mit dem Wellenabschnitt gekoppeltes Bauteil aufweist, das im Kraftfluss vor dem Wellenabschnitt angeordnet ist. Besonders bevorzugt jedoch wird das erste Drehmoment anhand einer ersten physikalischen Größe berechnet. Beispielsweise wird eine Anzahl an derartigen ersten physikalischen Größen herangezogen. Mit anderen Worten wird zunächst die erste physikalische Größe erfasst, und anhand derer das erste Drehmoment ermittelt. Insbesondere wird hierfür ein theoretisches/physikalische Modell des Lagersystems oder aber bevorzugt ein theoretisches Modell der elektrischen Maschine herangezogen, sofern das Lagersystem ein Bestandteil einer elektrischen Maschine ist. Zweckmäßigerweise wird als erste physikalische Größe eine Drehzahl des Wellenabschnitts herangezogen, also die Drehzahl, mit der der Wellenabschnitt zum Zeitpunkt der Erfassung des ersten Drehmoments um die Rotationsachse rotiert. Hierbei wird beispielsweise aufgrund einer bekannten Trägheit des Wellenabschnitts das erste Drehmoment ermittelt.

Sofern das Lagersystem ein Bestandteil einer elektrischen Maschine ist, wird besonders bevorzugt eine an einem Stator der elektrischen Maschine anliegende elektrische Spannung als erste physikalische Größe herangezogen, sofern die elektrische Maschine bürstenlos ausgestaltet ist. Die elektrische Spannung liegt an einer elektrischen Spule des Stators an. Alternativ oder in Kombination hierzu wird ein elektrischer Stromfluss des Stators zur Berechnung des ersten Drehmoments herangezogen. Besonders bevorzugt wird anhand der Drehzahl, des Stromflusses und der anliegenden elektrischen Spannung das erste Drehmoment berechnet. Insbesondere ist das Lagersystem Bestandteil eines Elektromotors, und anhand eines theoretischen Modells des Elektromotors wird unter Zuhilfenahme der Drehzahl, des elektrischen Stromflusses sowie der anliegenden elektrischen Spannung das erste Drehmoment berechnet. Ausgehend von diesen ersten physikalischen Größen wird das auf den Rotor aufgebrachte Drehmoment berechnet, der insbesondere an dem Wellenabschnitt angebunden ist, zweckmäßigerweise drehfest an diesem befestigt ist.

Sofern der Elektromotor mittels eines Umrichters bestromt wird, sind diese Daten bereits aufgrund der Regelung oder Steuerung des Elektromotors vorhanden, sodass kein weiterer Sensor zur Ermittlung des ersten Drehmoments erforderlich ist. Folglich sind Herstellungskosten der das Lagersystem aufweisenden elektrischen Maschine reduziert. Vorzugsweise wird die erste physikalische Größe direkt gemessen, also beispielsweise die Drehzahl, der elektrische Stromfluss oder aber die anliegende elektrische Spannung. Hierfür wird vorzugsweise ein geeigneter Sensor verwendet, beispielsweise ein Drehzahlsensor, elektrischer Stromsensor bzw. elektrischer Spannungssensor.

Beispielsweise wird das zweite Drehmoment direkt gemessen. Beispielsweise ist in den Wellenabschnitt eine Torsionswelle eingebracht, oder mit dieser gekoppelt. Alternativ hierzu wird eine Torsion des Wellenabschnitts bestimmt, beispielsweise mittels optischer Erfassung von auf dem Wellenabschnitt aufgebrachten optischen Kennzeichnungen, wie einer Maßverkörperung. Hierbei wird an axial zueinander versetzten Bereichen die einzelnen Markierungen optisch erfasst und hieraus die Torsion im Bereich zwischen diesen Bereichen bestimmt. In Kenntnis der physischen Eigenschaften des Wellenabschnitts kann hieraus die Torsion bestimmt werden, die aufgrund des zweiten Drehmoments bewirkt wird. Folglich ist eine Ermittlung des zweiten Drehmoments hieraus ermöglicht. Vorzugsweise wird das zweite Drehmoment direkt gemessen, und das erste Drehmoment anhand von der ersten physikalischen Größe berechnet. Somit ist keine doppelte Erfassung von mittels des Lagersystems aufgebrachten oder auf diese einwirkenden Größen erforderlich, also keine zwei baugleichen Sensoren, weswegen eine vergleichsweise große Anzahl an Messdaten zur Verfügung steht, die auch anderweitig weiter verwendet werden können.

Beispielsweise wird der Fehler gemeldet, sobald dieser identifiziert wird. Vorzugsweise wird der Fehler mittels einer Ausgabeeinheit ausgegeben, beispielsweise einer Anzeigeeinheit oder mittels eines akustischen Signals. Zweckmäßigerweise wird der Fehler mittels einer Datenleitung an eine Steuereinheit des Lagersystems, insbesondere der elektrischen Maschine, weitergeleitet. Aufgrund des gemeldeten Fehlers ist eine visuelle Überprüfung oder eine Demontage des Lagersystems zu einem geeigneten Zeitpunkt ermöglicht. Insbesondere ist der erste Grenzwert derart angepasst, dass ein Betrieb des Lagersystems auch bei einem Drehmomentverlust weiterhin möglich ist, der größer als der erste Grenzwert ist. Beispielsweise ist der erste Grenzwert darauf ausgelegt, dass das Lagersystem noch 1 h, 3 h, 4 h, 5 h oder 10 h betrieben werden kann, ohne dass eine vollständige Zerstörung des Lagersystem zu erwarten ist.

Beispielsweise wird das Lagersystem stillgesetzt, falls die Differenz größer als der erste Grenzwert ist. Mit anderen Worten wird, sobald erfasst wird, dass die Differenz größer als der erste Grenzwert ist, das Lagersystem abgebremst, und insbesondere gegen einen Wiederanlauf gesichert. Dies verhindert eine weitere Beschädigung des Lagersystems oder mit dem Lagersystem elektrisch/mechanisch gekoppelten Bauteilen. Zweckmäßigerweise wird ein zweiter Grenzwert verwendet, der beispielsweise größer als der erste Grenzwert ist. Besonders bevorzugt wird das Lagersystem lediglich dann stillgesetzt, wenn die Differenz aus dem ersten und zweiten Drehmoment größer als der zweite Grenzwert ist. Auf diese Weise ist eine Beschädigung des Lagersystems aufgrund eines vergleichsweise ausgeprägten Fehlverhaltens ausgeschlossen, wohingegen bei einem geringeren Fehlverhalten lediglich der Fehler identifiziert ist, der beispielsweise gemeldet wird. Somit ist die Sicherheit erhöht, da bei Überschreiten des ersten Grenzwerts zunächst noch ein Betrieb möglich ist, wohingegen bei einer vergleichsweise großen Differenz, also einem großen Drehmomentverlust, ein Stillsetzen erfolgt. Beispielsweise wird das Lagersystem geregelt stillgesetzt. Hierfür wird zweckmäßigerweise eine Rotationsbewegung des Wellenabschnitts entlang einer Rampe heruntergefahren bis die Drehzahl einem Wert von 0 (Null) U/min entspricht. In einer Alternative hierzu wird zunächst das erste Drehmoment auf 0 (Null) Nm gesetzt, sodass der Wellenabschnitt momentenlos austrudelt.

Zweckmäßigerweise wird der erste Grenzwert und/oder der zweite Grenzwert, sofern dieser vorhanden ist, in Abhängigkeit einer Temperatur variiert. Als Temperatur wird beispielsweise eine Umgebungstemperatur des Lagersystems oder eine Temperatur des Wellenabschnitts herangezogen. Beispielsweise wird eine Temperatur der elektrischen Maschine herangezogen, sofern das Lagersystem ein Bestandteil der elektrischen Maschine ist. Die Temperatur wird beispielsweise direkt gemessen, insbesondere mittels eines Temperatursensors, der vorzugsweise geeignet positioniert ist. Beispielsweise ist der Temperatursensor in thermischem Kontakt mit dem Wellenabschnitt, einem Lager, oder einem Stator/Rotor der elektrischen Maschine, sofern das Lagersystem ein Bestandteil der elektrischen Maschine ist. In einer Alternativ hierzu wird die Temperatur anhand von physikalischen Größen berechnet, wofür beispielsweise eine elektrische Verlustleistung der elektrischen Maschine herangezogen wird. Da eine Reibung üblicherweise temperaturabhängig ist, wird somit der Fehler abhängig von den aktuellen Anforderungen/Umgebungsbedingungen des Lagersystems identifiziert. Infolgedessen ist eine temperaturunabhängige Bestimmung des Drehmomentverlustes aufgrund von Reibung ermöglicht, sodass eine vergleichsweise präzise Bestimmung des Fehlers erfolgt.

Beispielsweise wird von dem ersten Drehmoment ein erster Toleranzwert abgezogen, bevor die Differenz erstellt wird. Alternativ oder in Kombination hierzu wird zu dem zweiten Drehmoment ein zweiter Toleranzwert addiert, bevor die Differenz erstellt wird. In einer weiteren Alternative hierzu werden die beiden Toleranzwerte in einem Arbeitsschritt entweder zu der Differenz addiert bzw. von dieser abgezogen, oder der erste Grenzwert entsprechend der Toleranzwerte angepasst. Insbesondere werden der erste Toleranzwert und/oder der zweite Toleranzwert theoretisch berechnet. Hierfür werden beispielsweise Fehler bei der Erfassung mittels der verwendeten Erfassungsvorrichtung (Drehmomenterfassungsvorrichtung) berücksichtigt, also eine Messgenauigkeit und eine etwaige Fehlerfortpflanzung. Beispielsweise sind die Toleranzwerte in einer Tabelle hinterlegt, oder werden erneut mittels eines mathematischen Modells berechnet. Beispielsweise sind die Toleranzwerte konstant oder abhängig von einer zweiten physikalischen Größe. Geeigneterweise werden die Toleranzwerte empirisch ermittelt, insbesondere bei einem Testen des Lagersystems, insbesondere im Wesentlichen unverzüglich nach dessen Fertigstellung. Bevorzugt werden die Toleranzwerte im Betrieb angepasst, beispielsweise bei einer Wartung oder mittels eines lernfähigen Systems, bei dem die ermittelten Differenzen berücksichtigt werden. Insbesondere ist die physikalische Größe eine Drehzahl des Wellenabschnitts. Sofern das Lagersystem ein Bestandteil der elektrischen Maschine ist, ist eine genaue Erfassung des ersten Drehmoments bei vergleichsweise geringen Drehzahlen lediglich vergleichsweise unpräzise möglich. In diesem Fall wird zweckmäßigerweise ein vergleichsweise großer erster Toleranzwert gewählt. In einer Alternative hierzu wird bei Unterschreiten einer Drehzahlgrenze das Verfahren vollständig beendet, sodass eine Fehleridentifikation unterbleibt. Zweckmäßigerweise ist der erste und/oder zweite Toleranzwert stets größer null. Sofern das erste Drehmoment berechnet wird, und folglich eine erste physikalische Größe herangezogen wird, ist somit ein Fehler beim Erfassen der ersten physikalischen Größe mittels des ersten Toleranzwerts berücksichtig.

Das Lagersystem weist einen Wellenabschnitt sowie ein Überwachungssystem auf. Das Überwachungssystem umfasst eine erste Drehmomenterfassungsvorrichtung zur Erfassung eines auf den Wellenabschnitt aufgebrachten ersten Drehmoments und eine zweite Drehmomenterfassungsvorrichtung. Die erste Drehmomenterfassungsvorrichtung ist vorgesehen und eingerichtet, ein auf den Wellenabschnitt aufgebrachtes erstes Drehmoment zu erfassen. Die zweite Drehmomenterfassungsvorrichtung ist vorgesehen und eingerichtet, ein von dem Wellenabschnitt aufgebrachtes zweites Drehmoment zu erfassen. Bei Betrieb wird mittels des Überwachungssystems das erste Drehmoment und das zweite Drehmoment erfasst, sowie hieraus eine Differenz gebildet. Sofern die Differenz größer als ein erster Grenzwert ist, wird ein Fehler identifiziert.

Das Lagersystem ist beispielsweise Bestandteil einer elektrischen Maschine, wie eines Elektromotors oder aber eines Generators. In einer Alternative hierzu ist das Lagersystem Bestandteil eines Antriebs, die eine elektrische Maschine und insbesondere ein Getriebe umfasst. Hierbei wird zweckmäßigerweise als erstes Drehmoment ein Drehmoment herangezogen, das mittels eines an dem Wellenabschnitt angebundenen Rotors aufgebracht wird. Als zweites Drehmoment wird zweckmäßigerweise ein Drehmoment herangezogen, das an einer Abtriebsseite des Getriebes anliegt. Beispielsweise umfasst das Lagersystem einen antriebsseitigen Wellenbereich des Wellenabschnitts und einen abtriebsseitigen Bereich des Wellenabschnitts, die miteinander verbunden sind. Beispielsweise sind diese direkt aneinander gekoppelt, oder aber mittels Zahnrädern miteinander verbunden. Zwischen den beiden Bereichen ist beispielsweise ein Lager angeordnet, insbesondere funktional und/oder räumlich. Zusammenfassend betrifft die Erfindung insbesondere ein Lagersystem, beispielsweise einer elektrischen Maschine, mit einem Wellenabschnitt, und mit einem Überwachungssystem, bestehend aus einer ersten Drehmomenterfassungsvorrichtung zur Erfassung eines ersten Drehmoments, das auf einen antriebsseitigen Bereich des Wellenabschnitts aufgebracht wird, einer zweiten Drehmomenterfassungsvorrichtung zur Erfassung eines zweiten Drehmoments, das von einem abtriebsseitigen Bereich des Wellenabschnitts aufgebracht wird, und einer Prozesssteuerung, die aus dem ersten Drehmoment und dem zweiten Drehmoment eine Differenz bildet und einen Fehler identifiziert, wenn dieses Differenz größer als ein erster Grenzwert ist.

Die elektrische Maschine ist ein Generator oder aber besonders bevorzugt ein Elektromotor, beispielsweise ein bürstenloser Elektromotor, vorzugsweise ein permanent erregter Synchronmotor. Die elektrische Maschine weist ein Lagersystem mit einem Wellenabschnitt und einem Überwachungssystem auf. Das Überwachungssystem umfasst eine erste Drehmomenterfassungsvorrichtung, die vorgesehen und eingerichtet ist, ein auf den Wellenabschnitt aufgebrachtes erstes Drehmoment zu erfassen. Das Überwachungssystem weist ferner eine zweite Drehmomenterfassungsvorrichtung auf, die vorgesehen und eingerichtet ist, ein von dem Wellenabschnitt aufgebrachtes zweites Drehmoment zu erfassen. Bei Betrieb wird mittels des Überwachungssystems das erste und das zweite Drehmoment erfasst sowie eine Differenz hieraus gebildet. Sofern die Differenz einen ersten Grenzwert übersteigt, also größer als der erste Grenzwert ist, ist ein Fehler identifiziert.

Insbesondere ist ein Rotor der elektrischen Maschine in direktem mechanischem Kontakt mit dem Wellenabschnitt. Beispielsweise ist die axiale Ausdehnung des Wellenabschnitts größer als die axiale Ausdehnung des Rotors und der Wellenabschnitt ragt aus einem Gehäuse der elektrischen Maschine hinaus. Beispielsweise weist der Wellenabschnitt einen antriebsseitigen Wellenbereich auf, der in direktem Kontakt mit dem Rotor ist, insbesondere von diesem radial umgeben ist. Vorzugsweise umfasst der Wellenabschnitt einen abtriebsseitigen Wellenbereich des Wellenabschnitts, der aus dem Gehäuse der elektrischen Maschine hinausragt.

Insbesondere ist die elektrische Maschine mittels eines Umrichters betrieben, mittels derer beispielsweise an einem Stator der elektrischen Maschine eine elektrische Spannung angelegt wird, und/oder mittels dessen ein elektrischer Stromfluss zu dem Stator erstellt wird. Insbesondere wird mittels geeigneter Bestromung des Stators eine Drehzahl des Wellenabschnitts eingestellt. Zweckmäßigerweise wird das erste Drehmoment berechnet, wofür zum Beispiel Betriebsdaten des Umrichters herangezogen werden. Insbesondere wird eine zur Regelung der elektrischen Maschine herangezogene Größe als erste physikalische Größe herangezogen. Beispielsweise weist die elektrische Maschine ein Getriebe auf, das insbesondere an den Wellenabschnitt angeflanscht ist. Insbesondere wird das zweite Drehmoment abtriebsseitig des Getriebes erfasst. Zusammenfassend betrifft die Erfindung eine elektrische Maschine, beispielsweise Elektromotor, mit einem Lagersystem, einem Wellenabschnitt und einem Überwachungssystem, bestehend aus einer ersten Drehmomenterfassungsvorrichtung zur Erfassung eines ersten Drehmoments, das auf einen antriebsseitigen Bereich des Wellenabschnitts aufgebracht wird, einer zweiten Drehmomenterfassungsvorrichtung zur Erfassung eines zweiten Drehmoments, das von einem abtriebsseitigen Bereich des Wellenabschnitts aufgebracht wird, und einer Prozesssteuerung, die aus dem ersten Drehmoment und dem zweiten Drehmoment eine Differenz bildet und einen Fehler identifiziert, wenn dieses Differenz größer als ein erster Grenzwert ist, wobei der abtriebsseitige Bereich des Wellenabschnitts in direktem mechanischen Kontakt mit einem Rotor steht.

Nachfolgend werden Ausführungsbeispiele der Erfindung anhand einer Zeichnung näher erläutert. Darin zeigen:
- Fig.1: schematisch vereinfacht einen Elektromotor einer Industrieanlage in einem Längsschnitt,
- Fig. 2: eine alternative Ausführungsform des Elektromotors mit einem Lagersystem,
- Fig. 3: ein Getriebe mit einem Lagersystem,
- Fig. 4: einen Antrieb mit einem Lagersystem, und
- Fig. 5: ein Verfahren zur Überwachung des Lagersystems.

Einander entsprechende Teile sind in allen Figuren mit den gleichen Bezugszeichen versehen.

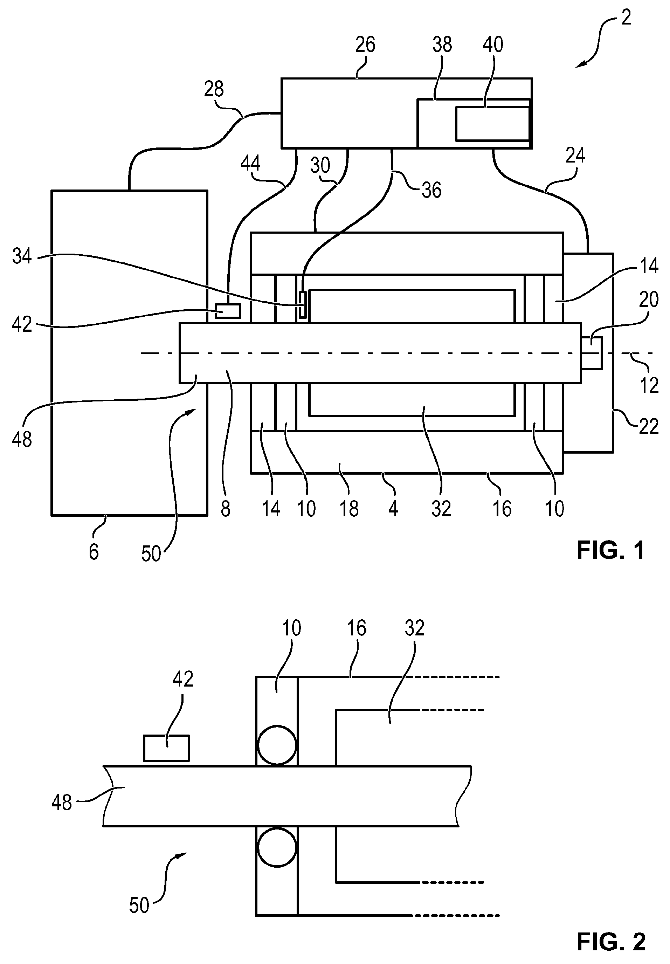

In Fig. 1 ist ein Antrieb 2 mit einem bürstenlosen Elektromotor 4 und einem hiervon angetriebenen Bauteil 6, wie einer Extrudermaschine, dargestellt. Das angetriebene Bauteil 6 ist mit einer Welle 8 des Elektromotors 4 gekoppelt, die mittels zweier Lager 10 um eine Rotationsachse 12 drehbar gelagert ist. Die Lager 10 sind jeweils an einem Lagerschild 14 angebunden, die wiederum an einem hohlzylindrischen Gehäuse 16 befestigt, innerhalb dessen ein Stator 18 angeordnet ist. Das Gehäuse 16 ist stirnseitig mittels der beiden Lagerschilde 14 verschlossen, durch die jeweils ein Ende der Welle 8 ragt, wobei eines dieser Enden ist mit dem angetriebenen Bauteil 6 gekoppelt ist. An dem gegenüberliegenden Ende ist ein Drehgeberrotor 20 eines Drehgebers 22 angebunden, wobei der Drehgeberstator an dem dieser Seite des Gehäuses 16 zugeordneten Lagerschild 14 befestigt ist.

Der Drehgeber 22 ist mittels einer ersten Datenleitung 24 mit einer Prozesssteuerung 26 des Elektromotors 4 signaltechnisch gekoppelt, die mittels einer zweiten Datenleitung 28 mit dem angetriebenen Bauteil 6 signaltechnisch verbunden ist, nämlich mit Sensoren des angetriebenen Bauteils 6. Die Prozesssteuerung 26 umfasst ferner einen nicht dargestellten Umrichter, der mit einer Stromleitung 30 mit elektrischen Spulen des Stators 18 verbunden ist. Hierbei erfolgt mittels der Stromleitung 30 eine Beaufschlagung der einzelnen Spulen des Stators 18, sodass mittels dieser ein sich drehendes Magnetfeld bei Betrieb geschaffen ist. Mittels dessen wird ein eine Anzahl nicht näher dargestellter Permanentmagneten aufweisender Rotor 32 in eine Rotationsbewegung um die Rotationsachse 12 versetzt. Der Rotor 32 selbst ist zwischen den Lagern 10 innerhalb des Gehäuses 16 angeordnet und an der Welle 8 drehsicher befestigt.

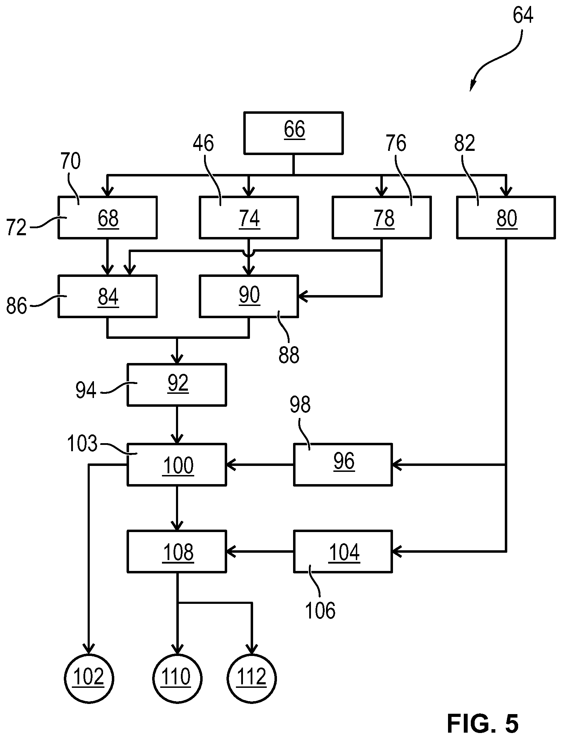

Ferner ist ein Temperatursensor 34 zwischen einem der Lager 10 und dem Rotor 32 im Bereich der Welle 8 angeordnet und mittels einer dritten Datenleitung 36 mit der Prozesssteuerung 26 gekoppelt. Die Prozesssteuerung 26 weist ferner ein Überwachungssystem 38 mit einer in die Elektronik integrierten ersten Drehmomenterfassungsvorrichtung 40 auf. Eine zweite Drehmomenterfassungsvorrichtung 42 ist mittels einer vierten Datenleitung 44 mit der Prozesssteuerung 26 signaltechnisch gekoppelt. Die zweite Drehmomenterfassungsvorrichtung 42 ist zwischen dem angetriebenen Bauteil 6 und dem Elektromotor 4 positioniert. Die zweite Drehmomenterfassungsvorrichtung 42 arbeitet nach einem optischen Prinzip und erfasst anhand einer Torsion der Welle 8 ein von der Welle 8 aufgebrachtes zweites Drehmoment 46 (Fig. 5). Die beiden Lager 10, das Überwachungssystem 38 mit den beiden Drehmomenterfassungsvorrichtungen 40,42 sowie der einen Wellenabschnitt 48 bildenden Welle 8 sind Bestandteile eines Lagersystems 50.

In Fig. 2 ist eine weitere Ausführungsform des Lagersystems 50 dargestellt. Hierbei ist das Gehäuse 16 mittels des als Wälzlagers ausgestalteten Lagers 10 verschlossen. Auch ist an dem Wellenabschnitt 48 der Rotor 32 angebunden und mittels der zweiten Drehmomenterfassungsvorrichtung 42 wird die Torsion des Wellenabschnitts 48 erfasst.

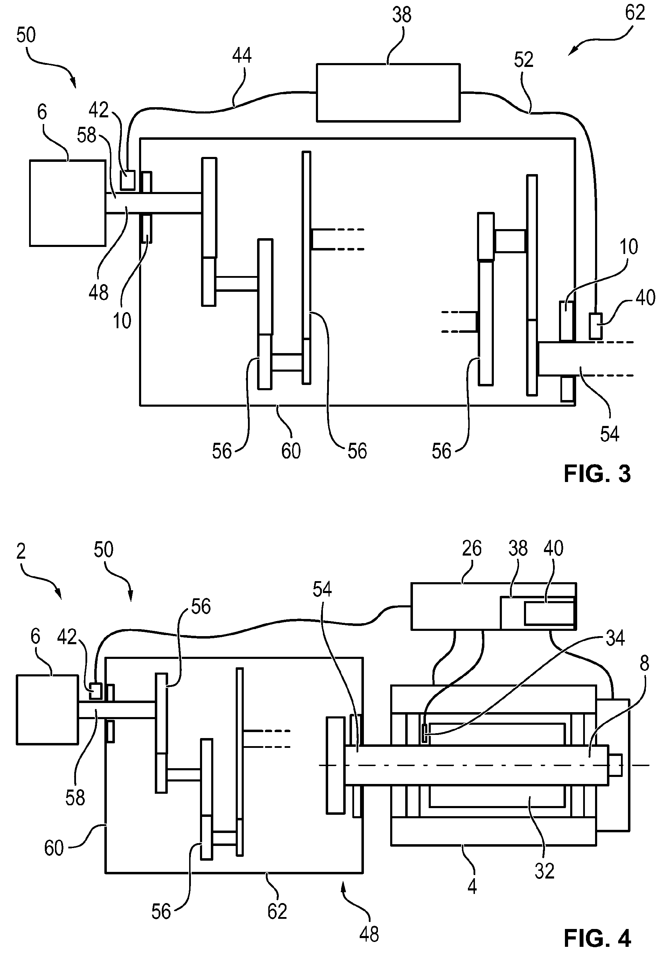

In Fig. 3 ist eine weitere Ausführungsform des Lagersystems 50 dargestellt. Wiederum ist der Wellenabschnitt 48 mit dem anzutreibenden Bauteil 6 gekoppelt, und mittels der zweiten Drehmomenterfassungsvorrichtung 42 wird die Torsion des Wellenabschnitts 48 bestimmt. Die zweite Drehmomenterfassungsvorrichtung 42 ist mittels der vierten Datenleitung 44 mit der Überwachungseinheit 38 signaltechnisch gekoppelt, die mittels einer fünften Datenleitung 52 mit der ersten Drehmomenterfassungsvorrichtung 40 gekoppelt ist. Die erste Drehmomenterfassungsvorrichtung 40 ist baugleich zur zweiten Drehmomenterfassungsvorrichtung 42. Die erste Drehmomenterfassungsvorrichtung 40 ist einem antriebsseitiger Bereich 54 des eine Anzahl an Zahnrädern 56 umfassenden Wellenabschnitt 48 zugeordnet, über den eine Krafteinleitung erfolgt. Dahingegen ist die zweite Drehmomenterfassungsvorrichtung 42 einem abtriebsseitigen Bereich 58 zugeordnet. Die beiden Bereiche 54, 58, sind jeweils mittels eines der Lager 10 drehbar gelagert, wobei jeder Bereich 54, 58 mit einem Zahnrad 56 direkt mechanisch verbunden ist. Mittels der Zahnräder 56 sind die beiden Bereiche 54, 58 miteinander gekoppelt. Die Zahnräder 56 wiederum sind innerhalb eines Getriebegehäuses 60 angeordnet. Die Zahnräder 56, das Gehäuse 60 und der Wellenabschnitts 48 sind Bestandteile eines Getriebes 62, das folglich das Lagersystems 50 umfasst.

In Fig. 4 ist eine weitere Ausgestaltung des Antriebs 2 mit dem Elektromotor 4, mit dem anzutreibenden Bauteil 6 sowie mit dem Getriebe 62 dargestellt. Der Elektromotor 4 entspricht der in Fig. 1 dargestellten Variante, ebenso auch das anzutragende Bauteil 6. Zwischen diesen ist funktional das in Fig. 3 dargestellte Getriebe 62 positioniert, wobei der antriebsseitige Bereich 54 mittels der Welle 8 des Elektromotors 4 gebildet ist. Die zweite Drehmomenterfassungsvorrichtung 42 ist wiederum dem abtriebsseitigen Bereich 58 des Wellenabschnitts 48 zugeordnet, also dem Bereich des Wellenabschnitts 48, der mit dem anzutreibenden Bauteil 6 gekoppelt ist. Der Wellenabschnitt 48 selbst wird somit mittels der Motorwelle 8 und mittels des abtriebsseitigen Bereichs 58 sowie mittels der Zahnräder 56 des Getriebes 62 als auch mittels der die einzelnen Zahnräder 56 verbindenden einzelnen Wellen gebildet. Der Wellenabschnitt 48 sowie die einzelnen Wälzläger 10 und das Überwachungssystem 38 mit den beiden Drehmomenterfassungsvorrichtungen 40, 42 sind somit das Lagersystem 50.

In Fig. 5 ist ein Verfahren 64 zum Betrieb des Überwachungssystems 38 des Lagersystems 50 in einem Flussdiagramm schematisch dargestellt. In einem ersten Arbeitsschritt 66 wird das Verfahren 64 gestartet. Dies erfolgt beispielsweise bei einem Start der Bestromung des Stators 18 mittels der Prozesssteuerung 26, oder in bestimmten Zeitintervallen. In einem zweiten Arbeitsschritt 68 wird mittels der ersten Drehmomenterfassungsvorrichtung 40 ein erstes Drehmoment 70 erfasst. Bei der in Fig. 3 dargestellten Ausführungsvariante erfolgt die Erfassung des ersten Drehmoments 70 mittels direkter Messung der Torsion des antriebsseitigen Bereichs 54 des Wellenabschnitts 48. In den in Figuren 1, 2 und 4 dargestellten Ausführungsvarianten des Lagersystems 50 wird für die Erfassung des ersten Drehmoments 70 eine erste physikalische Größe 72 erfasst. Als erste physikalische Größe 72 werden die Drehzahl der Welle 48, der mittels der Stromleitung 30 zwischen dem Umrichter und dem Stator 18 herrschende elektrische Stromfluss und die an dem Stator 18 anliegende elektrische Spannung herangezogen. Anhand derer wird mittels eines theoretischen Modells das auf die Welle 8 aufgebrachte erste Drehmoment 70 berechnet, das mittels des Rotors 32 sowie mittels des mit dem Stator 18 erstellten rotierenden Magnetfelds erzeugt wird. Hierfür wird die erste Drehmomenterfassungsvorrichtung 40 verwendet, innerhalb derer das theoretische Modell des Elektromotors 4 hinterlegt ist. Mit anderen Worten wird ein physikalisches Modell des Elektromotors 4 verwendet und mittels mathematischer Methoden das erste Drehmoment 70 berechnet.

In einem dritten Arbeitsschritt 74, der zeitgleich zu dem zweiten Arbeitsschritt 68 erfolgt, wird mittels der zweiten Drehmomenterfassungsvorrichtung 42 das mittels des Wellenabschnitts 48 aufgebracht zweite Drehmoment 46 direkt gemessen. Ferner wird zeitgleich eine zweite physikalische Größe 76 in einem vierten Arbeitsschritt 78 erfasst. Als zweite physikalische Größe 76 wird ebenfalls die Drehzahl des Wellenabschnitts 48 herangezogen. Ferner wird in einem zeitgleich fünften Arbeitsschritt 80 mittels des Temperatursensors 34 eine Temperatur 82 des Wellenabschnitts erfasst.

In einem sich hieran anschließenden sechsten Arbeitsschritt 84 wird mittels der zweiten physikalischen Größe 78 ein erster Toleranzwert 86 ermittelt. Bei einer vergleichsweise geringen Drehzahl und somit einer vergleichsweise geringen elektrischen Spannung/elektrischem Stromfluss, ist mittels des theoretischen Modells das erste Drehmoment 70 lediglich mit einer vergleichsweisen großen Ungenauigkeit ermittelbar. Daher wird bei vergleichsweise niedrigen Drehzahlen ein vergleichsweise großer erster Toleranzwert 86 gewählt, wohingegen bei vergleichsweise großen Drehzahlen der erste Toleranzwert 86 vergleichsweise klein ist. Beispielsweise ist der erste Toleranzwert 86 umgekehrt proportional zu der Drehzahl. Der erste Toleranzwert 86 wird von dem ersten Drehmoment 70 abgezogen. Die Differenz wird im weiteren Verlauf als erstes Drehmoment 70 herangezogen.

Anhand der zweiten physikalischen Größe 76 wird ferner ein zweiter Toleranzwert 88 in einem siebten Arbeitsschritt 90 erstellt. Der zweite Toleranzwert 88 wird zu dem zweiten Drehmoment 46 hinzuaddiert und die Summe als zweites Drehmoment 46 herangezogen. In einem sich hieran zeitlich anschließenden achten Arbeitsschritt 92 wird eine Differenz 94 gebildet, in dem von dem ersten Drehmoment das zweite Drehmoment 46 abgezogen wird.

In einem neunten Arbeitsschritt 96 wird ein erster Grenzwert 98 erstellt, wofür die Temperatur 82 herangezogen wird. Mit anderen Worten ist der erste Grenzwert 98 abhängig von der Temperatur 82. Der erste Grenzwert 98 ist in Abhängigkeit der Temperatur 82 entweder in einer Tabelle des Überwachungssystems 38 hinterlegt, oder wird mittels eines physikalischen Modells anhand mathematischer Methoden berechnet.

In einem zehnten Arbeitsschritt 100 wird der erste Grenzwert 98 mit der Differenz 94 verglichen. Ist die Differenz 94 kleiner als der erste Grenzwert 98 wird das Verfahren 64 in einem elften Arbeitsschritt 102 beendet. Falls dies nicht der Fall sein sollte, ist ein Fehler 103 identifiziert. Der Fehler 103 entspricht einem Verlust an Drehmoment mittels des Systems 50 der größer ist, als der erste Grenzwert 98. Der Drehmomentverlust wird von dem Lagersystem 50 aufgenommen, wobei diese Belastung zu einer Zerstörung der Lager 10 oder aber Teilen des Wellenabschnitts 48 führen könnten.

Mittels der Temperatur 82 wird ferner in einem zwölften Arbeitsschritt 104 ein zweiter Grenzwert 106 gestimmt, der folglich ebenfalls abhängig von der Temperatur 82 ist. Der zweite Grenzwert 106 ist größer als der erste Grenzwert 98 und wird in gleicher Art und Weise wie der erste Grenzwert 98 bestimmt. In einem dreizehnten Arbeitsschritt 108 wird die Differenz 94 mit dem zweiten Grenzwert 106 verglichen, sofern die Differenz 94 größer als der erste Grenzwert 98 ist, also der Fehler 103 vorliegt. Falls die Differenz 94 kleiner als der zweite Grenzwert 106 ist, wird der Fehler 103 in einem vierzehnten Arbeitsschritt 110 gemeldet. Das Melden des Fehlers 103 erfolgt mittels einer Anzeigevorrichtung, wie beispielsweise einer Lampe.

Sofern die Differenz 94 größer als der zweite Grenzwert 106 ist, wird sowohl der Fehler 103 gemeldet, als auch in einem fünfzehnten Arbeitsschritt 112 das Lagersystem 50 still gesetzt. Hierfür wird die mittels der Stromleitung 30 erfolgende Bestromung eingestellt, sodass die Motorwelle 8 stromlos austrudelt. Bei der in Fig. 3 dargestellten Variante wird beispielsweise der antriebsseitige Bereich 54 von einem Antrieb abgekoppelt.

Die Erfindung ist nicht auf die vorstehend beschriebenen Ausführungsbeispiele beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit den einzelnen Ausführungsbeispielen beschriebenen Einzelmerkmale auch auf andere Weise miteinander kombinierbar, ohne den Gegenstand der Erfindung zu verlassen.

### Bezugszeichenliste

- 2: Antrieb
- 4: Elektromotor
- 6: angetriebenes Bauteil
- 8: Welle
- 10: Lager
- 12: Rotationsachse
- 14: Lagerschild
- 16: Gehäuse
- 18: Stator
- 20: Drehgeberrotor
- 22: Drehgeber
- 24: erste Datenleitung
- 26: Prozesssteuerung
- 28: zweite Datenleitung
- 30: Stromleitung
- 32: Rotor
- 34: Temperatursensor
- 36: dritte Datenleitung
- 38: Überwachungssystem
- 40: erste Drehmomenterfassungsvorrichtung
- 42: zweite Drehmomenterfassungsvorrichtung
- 44: vierte Datenleitung
- 46: zweites Drehmoment
- 48: Wellenabschnitt
- 50: Lagersystem
- 52: fünfte Datenleitung
- 54: antriebsseitiger Bereich
- 56: Zahnräder
- 58: abtriebsseitiger Bereich
- 60: Getriebegehäuse
- 62: Getriebe

- 64: Verfahren
- 66: erster Arbeitsschritt
- 68: zweiter Arbeitsschritt
- 70: erstes Drehmoment
- 72: erste physikalische Größe
- 74: dritter Arbeitsschritt
- 76: zweite physikalische Größe
- 78: vierter Arbeitsschritt
- 80: fünfter Arbeitsschritt
- 82: Temperatur
- 84: sechster Arbeitsschritt
- 86: erster Toleranzwert
- 88: zweiter Toleranzwert
- 90: siebter Arbeitsschritt
- 92: achter Arbeitsschritt
- 94: Differenz
- 96: neunter Arbeitsschritt
- 98: erster Grenzwert
- 100: zehnter Arbeitsschritt
- 102: elfter Arbeitsschritt
- 103: Fehler
- 104: zwölfter Arbeitsschritt
- 106: zweiter Grenzwert
- 108: dreizehnter Arbeitsschritt
- 110: vierzehnter Arbeitsschritt
- 112: fünfzehnter Arbeitsschritt

## Patentansprüche

1. Verfahren (64) zur Überwachung eines Lagersystems (50), insbesondere einer elektrischen Maschine (4), das einen Wellenabschnitt (48) aufweist, bei dem
- ein auf den Wellenabschnitt (48) aufgebrachtes erstes Drehmoment (70) erfasst wird,
- ein von dem Wellenabschnitt (48) aufgebrachtes zweites Drehmoment (46) erfasst wird,
- eine Differenz (94) aus dem ersten Drehmoment (70) und dem zweiten Drehmoment (46) gebildet wird, und
- ein Fehler (103) identifiziert wird, falls die Differenz (94) größer als ein erster Grenzwert (98) ist.

2. Verfahren (64) nach Anspruch 1,
**dadurch gekennzeichnet,**
**dass** das erste Drehmoment (70) zeitgleich mit dem zweiten Drehmoment (46) erfasst wird.

3. Verfahren (64) nach Anspruch 1 oder 2,
**dadurch gekennzeichnet,**
**dass** das erste Drehmoment (70) anhand von zumindest einer ersten physikalischen Größe (72) berechnet wird.

4. Verfahren (64) nach Anspruch 3,
**dadurch gekennzeichnet,**
**dass** als erste physikalische Größe (72) eine Drehzahl des Wellenabschnitts (48), ein elektrischer Stromfluss eines Stators (18) oder eine an einem Stator (18) anliegende elektrische Spannung herangezogen wird.

5. Verfahren (64) nach einem der Ansprüche 1 bis 4,
**dadurch gekennzeichnet,**
**dass** das zweite Drehmoment (46) direkt gemessen wird.

6. Verfahren (64) nach einem der Ansprüche 1 bis 5,
**dadurch gekennzeichnet,**
**dass** der Fehler (103) gemeldet wird.

7. Verfahren (64) nach einem der Ansprüche 1 bis 6,
**dadurch gekennzeichnet,**
**dass** das Lagersystem (50) stillgesetzt wird, falls die Differenz (94) größer als ein zweiter Grenzwert (106) ist, der insbesondere größer als der erste Grenzwert (98) ist.

8. Verfahren (64) nach einem der Ansprüche 1 bis 7,
**dadurch gekennzeichnet,**
**dass** der erste Grenzwert (98) in Abhängigkeit einer Temperatur (82) variiert wird.

9. Verfahren (64) nach einem der Ansprüche 1 bis 8,
**dadurch gekennzeichnet,**
**dass** von dem ersten Drehmoment (70) ein erster Toleranzwert (86) abgezogen und/oder zu dem zweiten Drehmoment (46) ein zweiter Toleranzwert (88) addiert wird, wobei der erste bzw. zweite Toleranzwert (86, 46) abhängig von einer zweiten physikalischen Größe (76) ist, insbesondere der Drehzahl.

10. Lagersystems (50), insbesondere einer elektrischen Maschine (4), mit einem Wellenabschnitt (48), sowie mit einem Überwachungssystem (38), das eine erste Drehmomenterfassungsvorrichtung (40) zur Erfassung eines auf den Wellenabschnitt (48) aufgebrachten ersten Drehmoments (70) und eine zweite Drehmomenterfassungsvorrichtung (42) zur Erfassung eines von dem Wellenabschnitt (48) aufgebrachten zweiten Drehmoments (46) aufweist, und das gemäß einem Verfahren (64) nach einem der Ansprüche 1 bis 9 betrieben ist.

11. Elektrische Maschine (4), insbesondere Elektromotor, mit einem Lagersystem (50) nach Anspruch 10, wobei der Wellenabschnitt (48) in direktem mechanischen Kontakt mit einem Rotor (32) ist.
